# FASCICULE DE BREVET EUROPEEN

(11) **EP 3 723 482 B1**
(45) Date de publication et mention de la délivrance du brevet: **02.02.2022**
(21) Numéro de dépôt: 18836462.4
(22) Date de dépôt: 14.12.2018
(51) Int. Cl.: A01N 1/02

(54) **DISPOSITIF MEDICAL SOUS FORME DE CASSETTE POUR LA CONSERVATION D'UN PRELEVEMENT CORNEEN**
MEDIZINISCHE VORRICHTUNG IN FORM EINER KASSETTE ZUR KONSERVIERUNG EINER HORNHAUTPROBE
MEDICAL DEVICE IN THE FORM OF A CARTRIDGE FOR PRESERVATION OF A CORNEAL SPECIMEN

(30) Priorité: 15.12.2017 FR 1762209
(43) Date de publication de la demande: 21.10.2020
(73) Titulaire: Université Jean-Monnet, 42100 Saint Etienne (FR); Centre Hospitalier Universitaire, 42100 Saint Etienne (FR)
(72) Inventeur: GAIN, Philippe, 69009 Lyon (FR); THURET, Gilles, 42330 Saint Bonnet Les Oules (FR); HERBEPIN, Pascal, 69200 Venissieux (FR)
(74) Mandataire: Be IP
(86) Numéro de dépôt international: PCT/EP2018/084918
(87) Numéro de publication internationale: WO 2019/115754

(56) Documents cités:
- WO-A1-2010/116338
- WO-A1-2014/140434
- DE-B3-102014 222 547
- FR-A1- 2 965 254

## Description

### DOMAINE DE L'INVENTION

La présente invention concerne le domaine technique général des dispositifs médicaux pour la conservation et/ou le contrôle qualité (imagerie, analyse microbiologique, etc.) et/ou le traitement d'un tissu cornéen humain ou animal préalablement prélevé sur un donneur. Ce tissu cornéen est composé de la cornée elle même et de sa collerette de sclère périphérique qui l'entoure.

Un tel tissu cornéen conservé peut être utilisé pour réaliser une greffe de cornée, ou pour réaliser des expérimentations ex vivo.

Plus précisément, la présente invention concerne le domaine technique des dispositifs de conservation d'un tissu cornéen comprenant :
- des moyens de réception et de blocage du tissu cornéen,
- des moyens de circulation d'un (ou plusieurs) fluide(s) (liquide ou gazeux) de conservation du tissu cornéen.

### ARRIERE PLAN DE L'INVENTION

On a déjà proposé différents dispositifs de conservation d'un tissu cornéen.

Le document US 5 789 240 décrit un dispositif de conservation d'un tissu cornéen simulant la chambre antérieure de l'œil. Ce dispositif ne permet pas une circulation stérile d'un fluide de conservation sur les deux faces du tissu cornéen, c'est-à-dire, à la fois sur les faces épithéliale et endothéliale du tissu cornéen. Par ailleurs, les parois du dispositif n'étant pas transparentes, il est impossible de réaliser une-imagerie du tissu cornéen ou encore une intervention de découpe par un LASER sans ouvrir le dispositif. Ainsi la durée de survie du tissu cornéen est courte et incompatible avec une utilisation pour une greffe de cornée.

Le document WO 2014/140434 décrit un dispositif de conservation de tissu cornéen permettant de remédier à ces inconvénients.

Le dispositif selon WO 2014/140434 comprend :
- des moyens de réception d'un prélèvement cornéen incluant une première partie - dénommée *« pièce intermédiaire »* - comportant un trou du diamètre de la cornée entouré d'une gorge circulaire et d'un rebord formant un logement destiné à recevoir le prélèvement cornéen, le logement assurant le bon centrage du prélèvement cornéen lors de sa mise dans le dispositif et permettant au prélèvement cornéen de rester stable lors de l'ouverture du dispositif au bloc opératoire ;
- des moyens d'emprisonnement comportant une seconde partie - dénommée *« couvercle endothélial »* - comportant un trou du diamètre de la cornée entouré d'un rebord destiné à venir emprisonner le prélèvement cornéen en écrasant une collerette de sclère du prélèvement cornéen sur la gorge circulaire de la pièce intermédiaire,
les moyens de réception et d'emprisonnement du prélèvement cornéen bloquant de manière étanche la collerette de sclère qui entoure la cornée pour délimiter une chambre endothéliale et une chambre épithéliale séparées dans lesquelles peut circuler un milieu de conservation avec une surpression dans la chambre endothéliale.

Le dispositif de conservation décrit dans WO 2014/140434 présente de nombreux avantages et permet une conservation longue durée du tissu cornéen.

La présente invention vise à apporter des améliorations au dispositif décrit dans WO 2014/140434 afin de faciliter sa mobilité, son ergonomie et sa fiabilité tout en optimisant les coûts de fabrications associés.

Notamment, un but de la présente invention est de proposer un dispositif médical dans lequel :
- la durée de conservation du tissu cornéen est augmentée,
- la qualité du tissu cornéen est améliorée.

### BREVE DESCRIPTION DE L'INVENTION

A cet effet, l'invention concerne un dispositif médical sous forme d'une cassette intégrant un ensemble permettant la conservation d'un tissu cornéen préalablement prélevé, le dispositif comprenant :
- un fond au moins partiellement transparent,
- au moins une paroi latérale,
- des moyens de réception et de blocage du tissu cornéen, et
- un couvercle pour coiffer une ouverture de la paroi latérale opposée au fond,
- un compartiment de stockage contenant un fluide de conservation,
- au moins une borne d'entrée en amont du compartiment de stockage, ladite borne d'entrée étant destinée à être reliée à un dispositif d'injection de gaz comprimé de pressurisation, le gaz de pressurisation permettant :
   ∘ de propulser le fluide de conservation contenu dans le compartiment de stockage (24) vers les chambres de conservation,
   ∘ de maintenir le fluide de conservation à une pression prédéfinie,
le dispositif étant configuré de telle sorte que, en usage, le fond, la paroi latérale, et le couvercle définissent, avec le tissu cornéen, des chambres de conservation endothéliale et épithéliale, ***remarquable en ce que*** le dispositif comprend en outre, en amont des chambres de conservation :
- au moins une borne de contrôle en amont du compartiment de stockage, ladite borne de contrôle étant destinée à être reliée à un dispositif d'injection de gaz comprimé de contrôle,
- un système de commutation à pilotage pneumatique en aval des bornes, ledit système de commutation étant piloté par le gaz comprimé de contrôle pour autoriser ou interdire la circulation du gaz de pressurisation vers le compartiment de stockage

La cassette amovible incorporant les différents éléments permettant la conservation du tissu cornéen (compartiment de stockage du fluide de conservation, bornes, contrôleur, etc.) permet d'en faciliter la manipulation et améliore sa mobilité. Le fait que le système de commutation soit piloté par un gaz de contrôle permet en outre de réduire les coûts de production de la cassette.

Des aspects préférés mais non limitatifs du dispositif médical selon l'invention sont les suivants :
- le dispositif peut en outre comprendre un filtre en amont du compartiment de stockage pour filtrer le gaz comprimé de pressurisation injecté à la borne d'entrée ;
- le fluide de conservation peut être contenu directement dans le compartiment de stockage, le gaz comprimé de pressurisation filtré injecté à la borne d'entrée étant introduit directement dans le compartiment de stockage et se mélangeant au fluide de conservation ;
- le dispositif peut en outre comprendre un ballon gonflable logé dans le compartiment de stockage, le fluide de conservation étant contenu dans un récipient souple logé dans le même compartiment de stockage, l'injection de gaz comprimé de pressurisation induisant une dilatation du ballon gonflable de sorte que les parois dudit ballon appuie sur les parois du récipient souple et entraine l'éjection du fluide de conservation vers les chambres de conservation ;
- le dispositif comprend avantageusement des canaux de circulation de fluide de conservation et des canaux de circulation de gaz comprimé, lesdits canaux étant gravés dans la masse ;
- le dispositif comprend également un réservoir de récupération en aval des chambres de conservation, le système de commutation étant disposé en amont du réservoir de récupération et permettant de contrôler le débit du fluide de conservation à l'intérieur des chambres de conservation ;
- le système de commutation comprend au moins une vanne pilotée par pression pneumatique grâce au gaz comprimé de contrôle injecté dans l'au moins une borne de contrôle, chaque vanne étant fermée en l'absence de gaz comprimé de contrôle appliqué sur l'au moins une borne de contrôle ;
- le dispositif peut aussi comprendre un ballonnet de gonflage, l'actionnement manuel du ballonnet de gonflage permettant d'augmenter la pression dans le compartiment de stockage et donc ensuite dans les chambres de conservation ;
- les bornes d'entrée et de contrôle sont agencées sur le dispositif de sorte à être automatiquement connectées à des moyens de liaison reliés au dispositif d'injection lors de l'insertion dudit dispositif dans une station d'accueil ;
- le dispositif comprend en outre des moyens de guidage à sa périphérie permettant d'enficher ledit dispositif dans un casier d'une structure support de la station d'accueil.

### BREVE DESCRIPTION DES DESSINS

D'autres avantages et caractéristiques du dispositif selon l'invention ressortiront mieux de la description qui va suivre de plusieurs variantes d'exécution, données à titre d'exemples non limitatifs, à partir des dessins annexés sur lesquels :
- la figure 1 est une représentation schématique de chambres endothéliale et épithéliale du dispositif,
- les figures 2, 3 et 4 sont des représentations schématiques d'un dispositif médical intégré sous forme de cassette enfichable,
- la figure 5 est une représentation schématique d'une station d'accueil adaptée pour recevoir une pluralité de cassettes telles qu'illustrées aux figures 2 à 4,
- les figures 6 et 7 sont des représentations fonctionnelles de deux variantes de réalisation du dispositif médical intégré sous forme de cassette,
- la figure 8 est une représentation schématique d'une cassette vue en coupe laissant apparaître un système de commutation.
- la figure 9 est une représentation schématique illustrant plus en détails les chambres endothéliale et épithéliale.

### DESCRIPTION DETAILLEE DE L'INVENTION

Différents exemples du dispositif vont maintenant être décrits en référence aux figures. Dans ces différentes figures, les éléments équivalents sont désignés par la même référence numérique.

### 1. Généralités sur le dispositif

### 1.1. Structure générale du dispositif

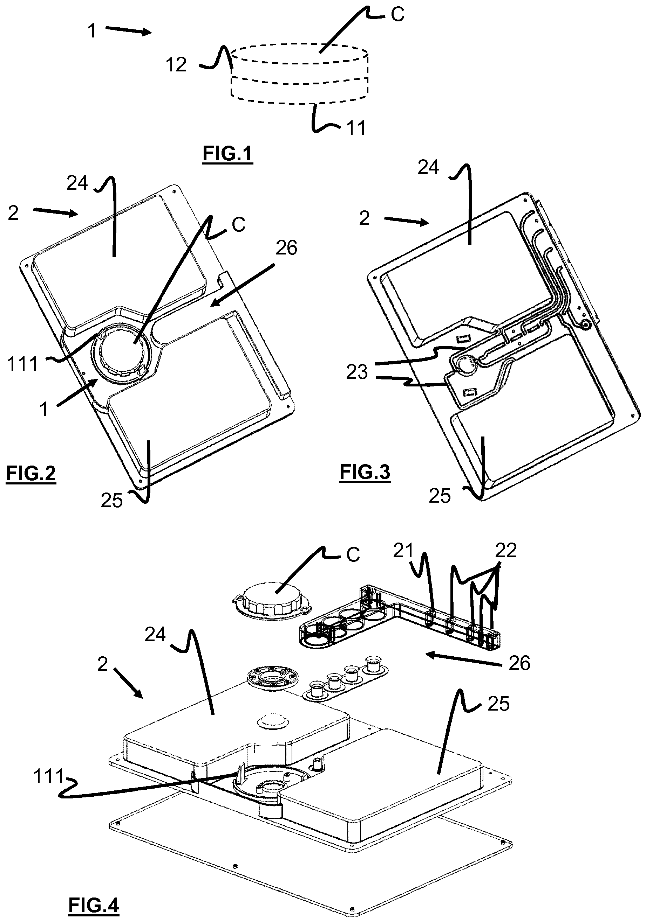

En référence à la figure 1, on a illustré des chambres de conservation 1 du dispositif, en particulier des chambres endothéliale et épithéliale, ces chambres de conservation 1 étant délimitées par :
- le tissu cornéen préalablement prélevé d'une part, et
- un fond 11 (représenté partiellement sur la figure 1), au moins une paroi latérale 12 et un couvercle C du dispositif d'autre part.

Le fond 11 est de préférence constitué dans un matériau transparent au rayonnement lumineux, soit en totalité soit dans une zone située en regard du couvercle C.

Le couvercle C peut consister en :
- un couvercle « standard » (incluant une paroi couvrante destinée à coiffer une ouverture supérieure de la paroi latérale 12 opposée au fond, et des moyens de fixation périphériques) constitué dans un matériau transparent, ou
- un couvercle d'applanation par exemple pour la découpe du tissu cornéen au LASER ou son imagerie, ou
- un couvercle de trépanation pour la trépanation mécanique du tissu cornéen, ou
- tout autre type de couvercle en fonction de l'application visée.

La transparence du fond 11 et du couvercle C offre la possibilité d'un accès visuel transversal (accès visuel de part en part pour l'inspection).

Dans le mode de réalisation illustré à la figure 1, les chambres de conservation présentent une forme cylindrique. Toutefois, les chambres conservation peuvent présenter d'autres formes (parallélépipédique, ovoïde, etc.) en fonction de l'application visée.

Le fond 11, la paroi latérale 12 et le couvercle C peuvent être réalisés en deux pièces ou plus.

Par exemple dans un premier mode de réalisation, le fond 11 et la paroi latérale 12 sont monobloc. Dans ce cas le fond 11 est transparent pour permettre une inspection visuelle du prélèvement cornéen), le couvercle C transparent consistant en une pièce indépendante destinée à fermer l'ouverture supérieure.

Dans un deuxième mode de réalisation, le couvercle C et la paroi latérale 12 sont monobloc.

Enfin dans un troisième mode de réalisation, le fond 11, la paroi latérale 12 et le couvercle C peuvent consister en trois pièces indépendantes destinées à être assemblées. Dans ces différentes variantes, le fond 11 comprend des moyens de clipsage 111 destinés à coopérer avec un rebord périphérique 122 s'étendant radialement vers l'extérieur de la paroi latérale 12.

Les moyens de clipsage 111 peuvent comprendre deux (ou plus de deux) pattes élastiques à retour élastique (par exemple à mémoire de forme) disposées en regard l'une de l'autre et s'étendant sensiblement perpendiculairement au fond 11. Lorsque le fond 11 comprend plus de deux pattes élastiques, celles-ci peuvent être régulièrement réparties en différentes positions du fond 11 de sorte à entourer la paroi latérale 12. Le fait que les pattes élastiques soient régulièrement réparties permet d'appliquer une force sensiblement homogène sur toute la périphérie de la paroi latérale 12.

Chaque patte élastique est pourvue d'un bec d'accrochage à son extrémité libre. Chaque bec d'accrochage fait saillie dans un plan horizontal (parallèle au fond 11). Bien entendu, les éléments de clipsage 111 pourraient être de tout autre type connu de l'homme du métier.

Avantageusement, chaque patte élastique peut comprendre une zone de faiblesse permettant de casser la patte élastique lors de l'application d'une force (supérieure à une valeur seuil) dans une direction opposée au bec d'accrochage. Ceci permet de faciliter le dégagement de la paroi latérale 12 afin de libérer le tissu cornéen lors d'une procédure chirurgicale de greffe de cornée par exemple.

Il est bien évident pour l'homme du métier que dans certains modes de réalisation, les pattes élastiques peuvent être dépourvues de zones de faiblesse. Ainsi dans ces modes de réalisation, les pattes élastiques peuvent être écartées (sans casser) pour permettre d'enlever et remettre le couvercle C au moment du prélèvement, par exemple lorsque le centrage de la cornée n'a pas été réalisé correctement.

### 1.2. Intégration du dispositif

Le dispositif est une cassette comportant les chambres de conservation destinées à recevoir le tissu cornéen, et un ensemble fluidique assurant la circulation d'un fluide de conservation depuis un compartiment de stockage jusqu'à un réservoir de récupération. L'ensemble des éléments est solidaire et indissociable et est façonné dans la masse.

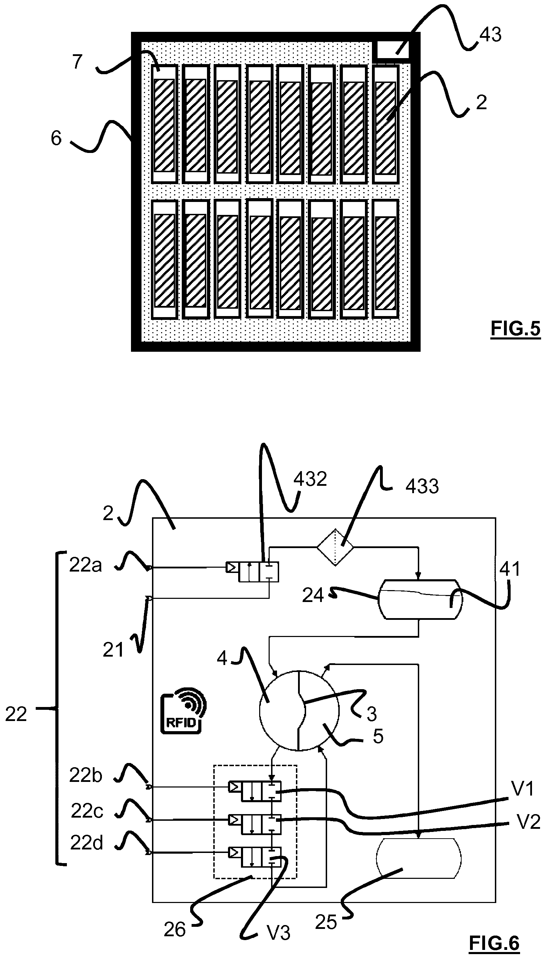

La cassette peut avoir par exemple la forme d'un parallélépipède incluant :
- une (ou plusieurs) borne(s) de connexion d'entrée 21 débouchant vers l'extérieur de la cassette 2, et destinée(s) à être raccordée(s) à des moyens de liaison d'une station d'accueil 6 (qui sera décrite dans la suite en référence à la figure 5), lesdits moyens de liaison étant connectés à une (ou plusieurs) source(s) de gaz de pressurisation,
- une (ou plusieurs) borne(s) de connexion de contrôle 22 débouchant vers l'extérieur de la cassette 2, et destinée(s) à être raccordée(s) aux moyens de liaison de la station d'accueil 6,
- un compartiment de stockage 24 formant logement pour un fluide de conservation (qui peut être contenu dans un récipient de type poche médicale),
- un réservoir de récupération 25 destiné à collecter les fluides usagers issus des chambres de conservation 1,
- un système de commutation 26 incluant un (ou plusieurs) clapet(s) déformable(s) pour contrôler le débit de circulation du fluide de conservation à l'intérieur des chambres de conservation, la mise en pression des chambres de conservation et la circulation du fluide de conservation etc.
- des canaux de circulation (de fluide de conservation ou de gaz) 23 s'étendant à l'intérieur de la cassette 2 entre :
   ∘ la (ou les) borne(s) de connexion d'entrée 21 et le compartiment de stockage 24,
   ∘ le compartiment de stockage 24 et les chambres de conservation 1,
   ∘ la ou les borne(s) de connexion de contrôle 22 et le système de commutation 26, et entre
   ∘ les chambres de conservation 1 et le réservoir de récupération 25
- ces canaux 23 sont avantageusement gravés dans le corps même de la cassette afin de s'affranchir des problèmes liés au câblage classique (tels que les raccords, les joints, les longueurs de tubulures, la porosité des tubulures en particulier aux gaz, etc.).

Avantageusement, chaque cassette peut comprendre une étiquette de radio-identification - connue sous le nom d'étiquette RFID (sigle de l'expression anglo-saxonne « *Radio Frequency IDentification* ») pour assurer une traçabilité du prélèvement cornéen au cours de sa conservation.

Chaque cassette peut en outre comprendre un ballonnet de gonflage, l'actionnement manuel du ballonnet de gonflage permettant d'augmenter la pression afin d'initier la première mise en pression des chambres de conservation 1 lorsque la cassette 2 est déconnectée de la station d'accueil 6.

### 1.3. Station d'accueil

Le fait que le dispositif intègre les chambres de conservation 1 et ses périphériques sous la forme d'une cassette 2 permet d'en faciliter la manutention et le stockage, par exemple dans une station d'accueil permettant de maintenir les chambres de conservation à une température désirée, à une pression contrôlable et dans une atmosphère contrôlée (pourcentages en N₂, O₂, CO₂ en particulier). Cette intégration permet en outre d'améliorer la stérilité de l'intérieur du dispositif médical, notamment grâce à la séparation des circuits de gaz et de fluide(s) de conservation ainsi que la connexion par des bornes (dépourvues de tubulure).

A titre indicatif, un exemple de station d'accueil est illustré à la figure 5. La station d'accueil 6 contient des moyens de régulation en température pour maintenir son volume intérieur à une température de consigne.

Cette station d'accueil 6 est par exemple une étuve de conservation du commerce. Le volume intérieur de la station d'accueil 6 comprend une structure support incluant des casiers 7 destinés à recevoir chacun une cassette 2 respective.

Chaque casier 7 comporte des moyens de liaison destinés à être connectés aux bornes d'entrée et de contrôle 21, 22 de sa cassette 2 associée pour permettre l'alimentation en gaz de celle-ci. L'insertion de la cassette dans le casier 7 permet de relier les moyens de liaison aux bornes d'entrée. Chaque casier 7 peut également comporter des moyens de contrôles de présence de cassette et/ou des moyens de lecture/écriture d'étiquette RFID.

La station d'accueil 6 contient également un dispositif d'injection 43 tel qu'une pompe à membrane ou tout autre système permettant de produire de l'air ou un gaz comprimé destiné à alimenter chaque cassette 2.

La station d'accueil inclut un moyen de contrôle de régulation de pression, ainsi qu'un moyen de commande séquentiel par commutation pneumatique du système de commutation 26. Ces moyens de contrôle et de commande sont communs à l'ensemble des cassettes 2. Ils sont attribués de façon séquentielle à chacune des cassettes 2, via les moyens de liaison contenus dans chacun des casiers dans lesquelles les cassettes sont enfichées. Ceci afin de mutualiser avantageusement la régulation de pression et le débit de liquide de conservation au sein de chacune des cassettes 2 présentes dans la station d'accueil 6.

La station d'accueil 6 peut être connectée (par une liaison avec ou sans fil) à une unité de commande distante telle qu'un ordinateur personnel, ou une tablette tactile, ou tout autre unité de commande connue de l'homme du métier.

Lorsqu'elle est insérée dans la station d'accueil 6, la cassette 2 est en mode conservation longue durée, avec une pression et un dédit de fluide de conservation régulé. Lorsque la cassette 2 est retirée de la station d'accueil 6, le débit de liquide est stoppé, et le système de commutation 26 intégré permet avantageusement un maintien en pression du fluide de conservation dans ses circuits internes en toute autonomie. Cette faculté couplée à une réduction de poids et de volume conséquent, confère à la cassette une extrême mobilité, autorisant avantageusement des déplacements d'un point à un autre.

Différents éléments du dispositif selon l'invention vont maintenant être décrits plus en détails.

### 2. Chambres de conservation

### 2.1. Moyens de blocage du tissu cornéen

Le dispositif comprend des moyens de blocage 14 en position du tissu cornéen 3 de sorte que la face épithéliale du tissu cornéen 3 s'étende en regard du couvercle 13.

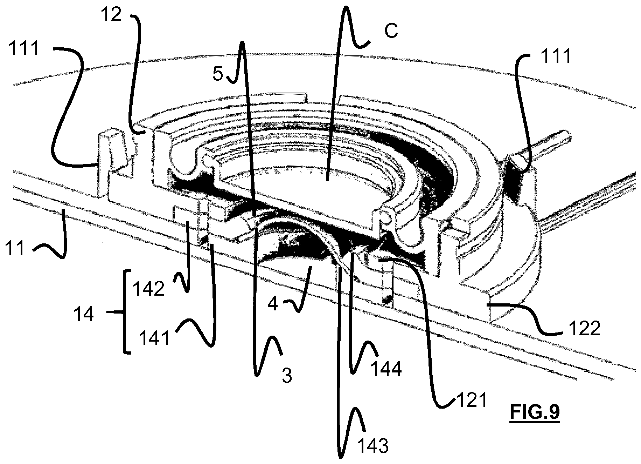

En référence à la figure 9, les moyens de blocage définissent, avec le tissu cornéen 3, les chambres de conservation dites respectivement « *chambre endothéliale »* 4 et *« chambre épithéliale »* 5.

Plus précisément, les moyens de blocage comprennent :
- une embase 141 sur laquelle le fond 11 est fixé, et destinée à recevoir le tissu cornéen 3,
- un anneau de maintien souple 142 permettant de maintenir le tissu cornéen 3 en position sur l'embase 141.

La chambre endothéliale 4 et la chambre épithéliale 5 peuvent comprendre chacune au moins trois orifices :
- un orifice d'entrée pour l'injection de fluide de conservation,
- un orifice de sortie pour l'évacuation du fluide de conservation, et
- un orifice technique pour le prélèvement d'échantillon de fluide (par exemple pour son analyse) ou l'injection de substances complémentaires dans la chambre.

Les orifices d'entrée et de sortie des deux chambres 4, 5 permettent de faire circuler un fluide de conservation et de le renouveler pour optimiser la conservation du tissu cornéen.

Avantageusement, la composition du fluide de conservation injecté dans la chambre épithéliale 5 peut être différente de la composition du fluide de conservation injecté dans la chambre endothéliale 4.

### 2.1.1. Embase

L'embase 141 constitue le socle de la cassette. Elle comprend une ouverture centrale dont le bord supérieur 143 (opposé au fond 11) est destiné à recevoir le tissu cornéen. Le diamètre de l'ouverture centrale est de préférence sensiblement égal au diamètre d'une cornée (typiquement entre 9 et 13 millimètres de diamètre).

La surface du bord supérieur 143 de l'embase 141 (i.e. opposé au fond 11) peut être incurvée pour se conformer à la courbure du tissu cornéen 3. Notamment, la surface du bord supérieur 143 peut présenter une forme tronconique, voir une forme torique.

Le tissu cornéen 3 est destiné à être disposé sur l'embase 141 de sorte que la collerette de sclère périphérique du tissu cornéen 3 vienne en contact avec le bord supérieur 143.

L'embase 141 comprend également (au moins) un orifice d'entrée et (au moins) un orifice de sortie. Les orifices d'entrée et de sortie permettent la circulation du fluide de conservation 41 dans la chambre endothéliale 4 dont les parois sont définies par :
- le fond 11 du dispositif,
- l'embase 141,
- l'anneau de maintien 142, et
- le tissu cornéen 3.

### 2.1.2. Anneau de maintien

L'anneau de maintien 142 s'étend perpendiculairement vers l'intérieur de la paroi latérale 12.

Le trou de l'anneau de maintien 142 peut être elliptique ou circulaire. Dans le cas d'un trou circulaire, le diamètre intérieur de l'anneau de maintien 142 est de préférence sensiblement égal au diamètre d'une cornée (typiquement entre 9 et 13 millimètres de diamètre) et sensiblement identique à l'ouverture centrale de l'embase 141. Ainsi la sclère du tissu cornéen 3 est destinée à venir en contact avec le bord intérieur 144 de l'anneau de maintien 142.

L'anneau de maintien est avantageusement réalisé dans un matériau souple, de sorte à s'incurver par déformation élastique pour se conformer au profil du bord supérieur 143dont le profil du bord 143 est complémentaire à la courbure du tissu cornéen. Ceci permet en outre à l'anneau de maintien 142 d'absorber les irrégularités éventuelles de la collerette de sclère en s'écrasant plus ou moins afin de garantir un appui de force calibrée et d'assurer l'étanchéité dans la zone de contact entre le prélèvement cornéen 3 et l'anneau de maintien 142.

L'anneau de maintien 142 peut être fixé à la paroi latérale 12 ou être monté de manière amovible sur ladite paroi latérale 12. Par exemple dans le mode de réalisation illustré aux figures 9 et 10, la face interne de la paroi latérale 12 comprend une bordure annulaire 121 s'étendant vers l'intérieur. Cette bordure annulaire 121 est destinée à plaquer l'anneau de maintien 142 contre l'embase 141 lorsque la paroi latérale 12 est assemblée sur le fond 11.

Bien entendu, la bordure annulaire 121 peut être remplacée par une pluralité de tétons disposés sur la face interne de la paroi latérale 12 et s'étendant radialement vers l'intérieur de celle-ci.

### 2.1.3. Principe de fonctionnement

Le principe de fonctionnement des moyens de blocage 14 est le suivant.

Le tissu cornéen 3 est déposé sur l'embase 141 de sorte que la face endothéliale du tissu cornéen 3 s'étende en regard du fond 11. La collerette de sclère périphérique du tissu cornéen 3 vient en contact avec le bord supérieur 143 de l'embase 141.

L'anneau de maintien 142 est déposé sur le tissu cornéen 3 Le bord intérieur 144 vient en contact avec la collerette de sclère périphérique du tissu cornéen 3.

La paroi latérale 12 du dispositif est assemblée sur le fond 11. Plus précisément, la paroi latérale 12 est déplacée en translation entre les moyens de clipsage 111. Les pattes élastiques à retour de forme s'écartent de leur position initiale lors du passage du rebord périphérique 122 au niveau des becs d'accrochage.

En se rapprochant du fond 11, la bordure annulaire 121 de la paroi latérale 12 tend à plaquer l'anneau de maintien 142 contre l'embase 141. Le déplacement en translation de la paroi latérale 12 induit un déplacement en translation de l'anneau de maintien 142 vers l'embase 141 de sorte à bloquer le tissu cornéen 3 en position.

Le fait que le mouvement de l'anneau de maintien soit rectiligne (i.e. translation de l'anneau de maintien 142 vers l'embase 141) plutôt qu'hélicoïdale (par exemple en cas de vissage de l'anneau de maintien) permet de limiter les risques de torsion du tissu cornéen 3 lors du blocage de celui-ci en position. Ceci permet d'améliorer la viabilité du tissu cornéen ainsi conservé. En effet, une torsion du tissu cornéen induit l'apparition de plis dans le tissu cornéen, ces plis provoquant une dégradation accélérée des cellules et du tissu cornéen 3.

Lorsque la bordure atteint une position dans laquelle le rebord périphérique 122 s'étend sous les becs d'accrochage, les pattes élastiques reviennent dans leurs positions initiales respectives de sorte que les becs d'accrochage plaquent la paroi latérale contre le fond 11 en appliquant une force d'appui sur le rebord périphérique 122.

La collerette de sclère est comprimée entre le bord supérieur 143 de l'embase 141 et le bord intérieur 144 de l'anneau de maintien 142 afin de maintenir le tissu cornéen 3 en position. L'utilisation de moyens de clipsage pour l'assemblage de la paroi latérale 12 contre le fond 11 permet de garantir l'application d'une force de compression constante de la collerette de sclère d'un dispositif médical à l'autre.

Ceci rend l'opération de mise en place d'un tissu cornéen dans le dispositif répétable et facilement réalisable par un opérateur peu expérimenté à l'utilisation du dispositif.

Le lecteur aura compris que le principe de fonctionnement ci-dessus a été présenté en référence à un dispositif médical dans lequel l'anneau de maintien 142 n'est pas fixé à la paroi latérale 12. Il est bien évident pour l'homme du métier que les étapes de mise en place de l'anneau de maintien 142 et de la paroi latéral 12 sont réalisées simultanément dans le cas d'un dispositif médical dans lequel l'anneau de maintien 142 est fixé à la paroi latérale 12.

### 2.2.Alimentation en fluide de conservation

Une fois le tissu cornéen installé et la circulation de fluide de conservation mise en service, le tissu cornéen peut être conservé plusieurs semaines avant son utilisation pour une greffe de cornée ou une expérimentation ex-vivo.

Pour augmenter la durée de cette conservation du prélèvement cornéen, un fluide de conservation est utilisé.

La gestion de l'alimentation du dispositif en fluide de conservation est assurée par l'ensemble d'éléments suivant :
- Au niveau de la cassette 2 :
   ∘ les borne(s) de connexion d'entrée 21 et de contrôle 22 destinées à être raccordée(s) à une (ou plusieurs) source(s) de gaz de pressurisation,
   ∘ le compartiment de stockage 24 formant logement pour un fluide de conservation : le fluide de conservation peut être contenu directement dans le compartiment 24 ou être contenu dans un récipient (par exemple de type poche médicale) disposé dans le compartiment 24,
   ∘ le réservoir de récupération 25 destiné à collecter les fluides usagers issus des chambres de conservation 1,
   ∘ le système de commutation 26 destiné à contrôler la circulation du fluide de conservation,
   ∘ les canaux de circulation 23 s'étendant à l'intérieur de la cassette 2,
- Au niveau de la station d'accueil 6 :
   ∘ les moyens de liaison destinés à être connectés aux bornes d'entrée et de contrôle,
   ∘ un dispositif d'injection 43 utilisant un gaz comprimé pour distribuer le fluide 41 et commander le système de commutation 26.

Cet ensemble d'éléments permet la circulation et le renouvellement du fluide de conservation dans la chambre endothéliale 4 et/ou dans la chambre épithéliale 5. Cet ensemble d'éléments permet en outre de faire varier la pression à l'intérieur des chambres endothéliale et épithéliale 4, 5 de manière à avoir continuellement une surpression dans la chambre endothéliale 4. Cette surpression peut correspondre à la pression rencontrée par la cornée de façon physiologique du côté endothélial, ou correspondre à toute autre pression choisie par l'utilisateur.

Avantageusement, si le compartiment 24 de la cassette 2 comprend deux fluides de conservation distincts (par exemple contenus dans des compartiments distincts du compartiment 24 ou dans des récipients de type poche médicale logés dans le compartiment 24) associés chacun à une chambre respective, alors la composition du fluide de conservation circulant dans la chambre endothéliale 4 peut être différente de la composition du fluide de conservation circulant dans la chambre épithéliale 5 (par exemple un mélange liquide de conservation + gaz de composition contrôlée N₂ O₂ CO₂). Ceci permet de disposer d'un milieu de conservation adapté à chaque type cellulaire (endothéliale et épithéliale).

Le dispositif d'injection 43 permet l'injection de gaz sous pression dans le compartiment de stockage 24 et dans le système de commutation 26. Le dispositif d'injection 43 peut être contenu dans la station d'accueil 6 et être connecté à la cassette 2 par l'intermédiaire des bornes de connexion 21, 22 de la cassette 2. Le dispositif d'injection 43 est par exemple un compresseur de gaz, ou cartouche de gaz comprimé, ou une connexion à un réseau d'air comprimé, permettant de générer 2 pressions distinctes : une pression régulée destinée à la pressurisation de la chambre endothéliale par l'intermédiaire d'un organe de commutation 432 (tel qu'une vanne), et une pression de service destinée à commander les organes de commutations de fluide 26 via les liaisons 22.

L'utilisation d'un dispositif d'injection 43 de gaz sous pression (en lieu et place de la pompe à galet décrite dans WO 2014/140434) dissocié de la cassette 2 présente de nombreux avantages.

Notamment il permet :
- de réduire l'encombrement et le poids de la cassette 2 intégrant les chambres de conservation,
- d'augmenter la durée de vie de la cassette 2 (en s'affranchissant du problème d'usure des tuyaux lié à l'utilisation d'une pompe péristaltique),
- de réduire la chaleur générée par la pompe (le moteur d'une pompe péristaltique dégageant plus de calories qu'un dispositif d'injection à gaz comprimé),
- de réduire les *« à-coups »* dans la régulation du débit de fluide de conservation et de la pression,
- de réguler de façon plus précise la pression et le débit dans la (ou les) chambre(s),
- d'améliorer le rendement énergétique de pressurisation-circulation,
- de faciliter la réalisation d'un circuit fluidique indépendant dans la chambre épithéliale, afin de l'exposer à un fluide de conservation différent de la chambre endothéliale,
- de faciliter l'exposition intermittente du prélèvement cornéen 3 à un flux de gaz (tel que de l'air ou à une atmosphère contrôlée par enrichissement d'oxygène et/ou de dioxyde de carbone) pour améliorer la qualité du tissu cornéen et/ou faciliter son imagerie (possibilité de remplir la chambre épithéliale de gaz (air par exemple) ce qui autorise l'utilisation d'instruments de mesure optique du greffon (pachymétrie ou détection d'aberrations optiques dues à une chirurgie réfractive du donneur, à titre d'exemple par tomographie par cohérence optique, ou microscopie spéculaire),
- de limiter les risques de contamination par le milieu extérieur,
- de faciliter le transport du dispositif (du site de prélèvement jusqu'à la banque de cornée puis de la banque jusqu'au bloc opératoire) en intégrant tous les éléments nécessaires à la conservation du tissu cornéen dans celui-ci.

Le gaz sous pression permet de propulser le fluide de conservation 41 dans les chambres de conservation.

### 2.2.1. Alimentation en fluide de type « avec contact »

En référence à la figure 6, on a illustré un mode de réalisation dans lequel le fluide de conservation 41 est stocké directement dans le compartiment de stockage 24 pour une alimentation en fluide de type « *avec contact ».*

Dans ce cas le gaz comprimé issu du dispositif d'injection est introduit directement dans le compartiment 24 pour propulser le fluide de conservation 41 vers la chambre endothéliale 4 (le gaz et le fluide se mélangent dans cette configuration). L'avantage de cette solution est de permettre des échanges entre le gaz et le fluide de conservation (par exemple enrichissement en dioxygène et/ou en dioxyde de carbone).

Dans le mode de réalisation illustré à la figure 6, la cassette 2 comprend un organe de commutation 432 et un filtre 433 entre les bornes d'entrée 21 et de contrôle 22 d'une part, et le compartiment de stockage 24 d'autre part.

Dans ce mode de réalisation, le principe de fonctionnement est le suivant. Le dispositif d'injection 43 fournit :
- un gaz comprimé de pressurisation régulé en pression par l'intermédiaire de la borne d'entrée 21, ce gaz de pressurisation étant destiné à être injecté dans le compartiment de stockage 24, et
- un gaz comprimé de contrôle par l'intermédiaire des bornes de contrôle 22, ce gaz de contrôle permettant de piloter l'ouverture et la fermeture de l'organe de commutation 432,

L'organe de commutation 432 commande l'injection du gaz de pressurisation vers le compartiment de stockage 24. Plus précisément, un gaz comprimé de contrôle (formant commande pneumatique) est appliqué sur la borne de contrôle 22a pour autoriser le gaz de pressurisation sous pression injecté via la borne d'entrée 21 à se propager vers le compartiment de stockage 24.

Le filtre 433 stérilise le gaz de pressurisation comprimé issu du dispositif d'injection 43 préalablement à son introduction dans le compartiment 24. Le gaz de pressurisation injecté dans le compartiment de stockage pousse le fluide de conservation 41 vers la chambre endothéliale 4. Le milieu initialement contenu dans la chambre endothéliale 4 (par exemple l'air lors de la fermeture du dispositif), est chassé vers la chambre épithéliale 5.

### 2.2.2. Alimentation en fluide de type sans contact

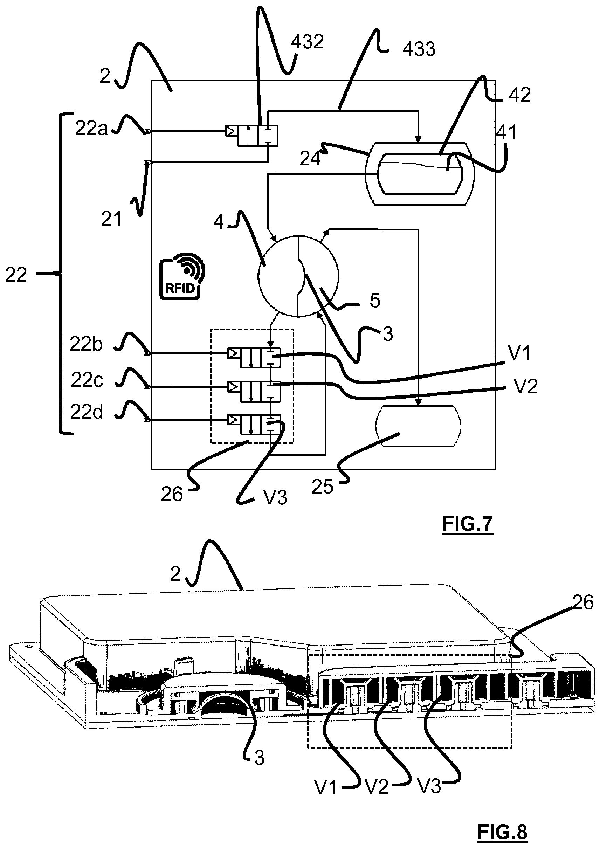

En référence à la figure 7, on a illustré un mode de réalisation dans lequel le fluide de conservation 41 est contenu dans un récipient 42 logé dans le compartiment de stockage 24 pour une alimentation en fluide de type « *sans contact ».* Le récipient 42 peut consister en une poche médicale comportant deux feuilles flexibles ou souples superposées et soudées à leur périphérie.

Un ballon gonflable destiné à recevoir le gaz de pressurisation est également logé dans le compartiment de stockage 24. Ce ballon gonflable permet d'exercer une pression sur les faces extérieures des parois du récipient 42 lors de sa dilatation pour propulser du fluide de conservation 41 vers la chambre endothéliale 4 (le gaz et le fluide ne se mélangent pas dans cette configuration).

Dans le mode de réalisation illustré à la figure 7, la cassette 2 comprend un organe de commutation 432 entre les bornes 21,22 et le compartiment de stockage 24.

Dans ce mode de réalisation, le principe de fonctionnement est le suivant. Le dispositif d'injection 43 fournit les gaz comprimés (de pressurisation et de contrôle) aux bornes d'entrée et de contrôle 22.

L'organe de commutation 432 - asservi par le capteur de pression - commande l'injection du gaz de pressurisation dans le compartiment de stockage 24. Plus précisément, un gaz comprimé de contrôle (formant commande pneumatique) est appliqué sur la borne de contrôle 22a pour autoriser le gaz de pressurisation sous pression injecté via la borne d'entrée 21 à se propager vers le compartiment de stockage 24.

Le gaz de pressurisation comprimé est introduit dans le ballon gonflable qui tend à appuyer sur les parois du récipient 42 lors de sa dilatation.

Cette pression exercée par le ballon gonflable sur le récipient 42induit l'éjection du fluide de conservation 41 vers la chambre endothéliale 4.

### 2.2.3. Système de commutation

Le dispositif d'injection 43 fournit également un gaz comprimé de contrôle au système de commutation 26 par l'intermédiaire des bornes de contrôle 22b, 22c, 22d. Ce gaz de contrôle permet de piloter le système de commutation 26.

En référence à la figure 8, on a illustré un exemple de système de commutation 26 permettant de contrôler le débit et la pression du fluide de conservation à l'intérieur des chambres endothéliale 4 et épithéliale 5.

Le système de commutation 26 comprend des vannes V1, V2, V3 pilotées par pression pneumatique (grâce au gaz de contrôle injecté dans les bornes de contrôle 22b, 22c, 22d).

Ces vannes V1, V2, V3 peuvent consister en des clapets en élastomères déformables sous l'effet d'une pression pneumatique. Ces vannes V1, V2, V3 présentent la particularité d'être fermées en l'absence d'une pression de pilotage. Ceci permet avantageusement à la cassette 2 de rester sous pression lorsqu'elle est retirée de son casier 7.

Les vannes V1, V2, V3 sont actionnés selon une séquence animée en cinq étapes.

Dans une première étape (dite initiale), les trois vannes V1, V2, V3 sont fermées au repos et aucun liquide ne peut circuler à travers le système de commutation 26.

Dans une deuxième étape, le dispositif d'injection 43 émet un gaz de contrôle dans les bornes de contrôle 22b, 22C. Les première et deuxième vannes V1, V2 s'ouvrent sous l'action du gaz de contrôle. Ceci permet au fluide de conservation de s'introduire dans la deuxième vanne V2, via la première vanne V1.

Dans une troisième étape, le dispositif d'injection 43 stoppe l'émission de gaz de contrôle dans la borne de contrôle 22b. La première vanne V1 se referme emprisonnant ainsi une quantité de fluide de conservation dans le volume mort de la deuxième vanne V2.

Dans une quatrième étape, le dispositif d'injection 43 émet un gaz de contrôle dans la borne de contrôle 22d. La troisième vanne V3 s'ouvre pour libérer le fluide contenu dans la deuxième vanne V2.

Dans une cinquième étape, le dispositif d'injection 43 stoppe l'émission de gaz de contrôle dans la borne de contrôle 22c. La deuxième vanne V2 se referme en expulsant le fluide contenu dans son volume mort vers la troisième vanne V3.

Le retour à l'étape initiale se traduit par la fermeture de la troisième vanne V3 qui expulse à son tour le fluide contenu dans son volume mort en direction de la chambre épithéliale 5.

Un cycle complet déplace un volume de fluide équivalant au volume mort d'une vanne, et en particulier au volume mort de la deuxième vanne V2. C'est donc le volume mort de la deuxième vanne V2, et la fréquence de répétition de la séquence qui va déterminer le débit de fluide dans la cassette 2.

### Conclusions

L'invention décrite précédemment permet d'améliorer la mise en œuvre du bioréacteur selon WO 2014/140434, la qualité du tissu cornéen ainsi que de son imagerie, et d'étendre ses applications à de nouvelles fonctions, tels que la découpe cornéenne en vase clos au laser, la trépanation cornéenne etc.
a. Le dispositif décrit précédemment permet d'augmenter la durée de conservation d'un tissu cornéen. Par ailleurs, il permet d'améliorer la qualité du tissu cornéen conservé.
   Notamment l'agencement des moyens de blocage, et en particulier le déplacement en translation de l'anneau de maintien 142 par rapport à l'embase 141 permet d'éviter la torsion du tissu cornéen 3 et donc l'apparition de plis dans celui-ci.
   Par ailleurs, la présence de moyens de clipsage 111 pour l'assemblage de la paroi latérale 12 sur le fond 11 permet de garantir l'application d'une force de compression constante sur le tissu cornéen. Ceci rend l'opération de mise en place de tissus cornéens répétable d'un dispositif médical à l'autre.
b. Le dispositif décrit précédemment permet également d'améliorer la qualité d'imagerie du tissu cornéen 3.
   Notamment, le fait que le couvercle d'applanation 13 comprenne des moyens de déplacement en translation de la fenêtre 131 permet de limiter les risques de vrillage du tissu cornéen 3 lors de son aplatissement, ce vrillage pouvant dégrader la qualité d'imagerie du tissu cornéen 3.
c. Enfin, le dispositif décrit précédemment permet de faciliter la manipulation du tissu cornéen 3, notamment en ce qui concerne son extraction du dispositif, par exemple lors d'une intervention chirurgicale de greffe de cornée.
   En référence à l'extraction du tissu cornéen 3, la présence d'une zone de faiblesse sur les pattes élastiques permet de les rendre sécables sous l'action d'une force d'intensité supérieure à un seuil de rupture de la zone de faiblesse. Ceci facilite le désassemblage de la paroi latérale 12 afin de libérer le tissu cornéen 3 lors d'une procédure chirurgicale de greffe.

Le lecteur aura compris que de nombreuses modifications peuvent être apportées au dispositif médical décrit précédemment sans sortir matériellement des nouveaux enseignements et des avantages décrits ici. L'invention est exposée dans le jeu de revendications joint.

## Revendications

1. Dispositif médical sous forme d'une cassette (2) intégrant un ensemble permettant la conservation d'un tissu cornéen (3) préalablement prélevé, le dispositif comprenant :
- un fond (11) au moins partiellement transparent,
- au moins une paroi latérale (12),
- des moyens de réception et de blocage du tissu cornéen, et
- un couvercle (C) transparent pour coiffer une ouverture de la paroi latérale opposée au fond (11),
- un compartiment de stockage (24) contenant un fluide de conservation (41),
- au moins une borne d'entrée (21) en amont du compartiment de stockage (24), ladite borne d'entrée (21) étant destinée à être reliée à un dispositif d'injection (43) de gaz comprimé de pressurisation, le gaz de pressurisation permettant :
∘ de propulser le fluide de conservation (41) contenu dans le compartiment de stockage (24) vers les chambres de conservation,
∘ de maintenir le fluide de conservation (41) à une pression prédéfinie,
le dispositif étant configuré de telle sorte que, en usage, le fond (11), la paroi latérale (12), et le couvercle (C) définissent avec le tissu cornéen des chambres de conservation endothéliale et épithéliale,
***caractérisé en ce que*** le dispositif comprend en outre, en amont des chambres de conservation :
- au moins une borne de contrôle (22) en amont du compartiment de stockage (24), ladite borne de contrôle (22) étant destinée à être reliée à un dispositif d'injection (43) de gaz comprimé de contrôle,
- un système de commutation à pilotage pneumatique (26) en aval des bornes (21, 22), ledit système de commutation (26) étant piloté par le gaz comprimé de contrôle pour autoriser ou interdire la circulation du gaz comprimé de pressurisation vers le compartiment de stockage (24).

2. Dispositif selon la revendication 1, ***lequel*** comprend en outre un filtre (433) en amont du compartiment de stockage (24) pour filtrer le gaz comprimé de pressurisation injecté à la borne d'entrée (21).

3. Dispositif selon la revendication 2, ***dans lequel*** le fluide de conservation est contenu directement dans le compartiment de stockage (24), le gaz comprimé de pressurisation filtré injecté à la borne d'entrée étant introduit directement dans le compartiment de stockage (24) et se mélangeant au fluide de conservation (41).

4. Dispositif selon la revendication 1, ***lequel*** comprend en outre un ballon gonflable logé dans le compartiment de stockage (24), le fluide de conservation étant contenu dans un récipient souple (42) logé dans le compartiment de stockage (24), l'injection de gaz comprimé de pressurisation induisant une dilatation du ballon gonflable de sorte que les parois dudit ballon appuie sur les parois du récipient souple (42) et entraine l'éjection du fluide de conservation (41) vers les chambres de conservation.

5. Dispositif selon l'une des revendications 1 à 4, ***lequel*** comprend en outre des canaux (23) de circulation de fluide de conservation et des canaux (23) de circulation de gaz comprimé, lesdits canaux (23) étant gravés dans la masse.

6. Dispositif selon l'une quelconque des revendications 1 à 5, ***lequel*** comprend en outre un réservoir de récupération (25) en aval des chambres de conservation (1), le système de commutation (26) étant disposé en amont du réservoir de récupération (25) et permettant de contrôler le débit du fluide de conservation (41) à l'intérieur des chambres de conservation (1).

7. Dispositif selon les revendications 1 et 6 prises en combinaison, ***dans lequel*** le système de commutation (26) comprend au moins une vanne pilotée par pression pneumatique grâce au gaz comprimé de contrôle injecté dans l'au moins une borne de contrôle (22a, 22b, 22c, 22d), chaque vanne étant fermée en l'absence de gaz comprimé de contrôle appliqué sur l'au moins une borne de contrôle (22a, 22b, 22c, 22d).

8. Dispositif selon l'une quelconque des revendications 1 à 7, ***lequel*** comprend en outre un ballonnet de gonflage, l'actionnement manuel du ballonnet de gonflage permettant d'augmenter la pression dans le compartiment de stockage et donc dans les chambres de conservation.

9. Dispositif selon l'une quelconque des revendications 1 à 8, ***dans lequel*** les bornes d'entrée (21) et de contrôle (22) sont agencées sur le dispositif de sorte à être automatiquement connectées à des moyens de liaison reliés au dispositif d'injection (43) lors de l'insertion dudit dispositif dans une station d'accueil (6).

10. Dispositif selon la revendication 9, ***lequel*** comprend en outre des moyens de guidage à sa périphérie permettant d'enficher ledit dispositif dans un casier d'une structure support de la station d'accueil (6).

## Patentansprüche

1. Medizinische Vorrichtung in Form einer Kassette (2), die eine Einheit integriert, die die Konservierung eines zuvor entnommenen Hornhautgewebes (3) gestattet, wobei die Vorrichtung umfasst:
- einen mindestens teilweise transparenten Boden (11),
- mindestens eine Seitenwand (12),
- Aufnahme- und Arretierungsmittel des Hornhautgewebes, und
- eine transparente Abdeckung (C), um eine Öffnung der Seitenwand gegenüber dem Boden (H) abzudecken,
- ein Lagerfach (24), das ein Konservierungsfluid (41) enthält,
- mindestens eine dem Lagerfach (24) vorgelagerte Einlassstelle (21), wobei die Einlassstelle (21) zur Verbindung mit einer Vorrichtung zum Einleiten (43) von komprimiertem Druckgas bestimmt ist, wobei das Druckgas erlaubt:
∘ das im Lagerfach (24) enthaltene Konservierungsfluid (41) zu den Konservierungskammern zu befördern,
∘ das Konservierungsfluid (41) unter einem vorher festgelegten Druck zu halten,
wobei die Vorrichtung derart ausgelegt ist, dass im Gebrauch der Boden (11), die Seitenwand (12) und die Abdeckung (C) mit dem Hornhautgewebe Endothel- und Epithel-Konservierungskammern definieren,
**dadurch gekennzeichnet, dass** die Vorrichtung ferner den Konservierungskammern vorgelagert umfasst:
- mindestens eine dem Lagerfach (24) vorgelagerte Kontrollstelle (22), wobei die Kontrollstelle (22) bestimmt ist, mit einer Vorrichtung zum Einleiten (43) von komprimierten Kontrollgases verbunden zu sein,
- ein den Stellen (21, 22) nachgelagertes pneumatisch gesteuertes Umschaltsystem (26), wobei das Umschaltsystem (26) von dem komprimierten Kontrollgas gesteuert wird, um die Zirkulation des komprimierten Druckgases in Richtung des Lagerfachs (24) zu gestatten.

2. Vorrichtung nach Anspruch 1, die ferner einen dem Lagerfach (24) vorgelagerten Filter (433) umfasst, um das an der Einlassstelle (21) eingeleitete komprimierte Druckgas zu filtern.

3. Vorrichtung nach Anspruch 2, wobei das Konservierungsfluid direkt in dem Lagerfach (24) enthalten ist, wobei das an der Einlassstelle eingeleitete gefilterte komprimierte Druckgas direkt in das Lagerfach (24) eingeleitet wird und sich mit dem Konservierungsfluid (41) mischt.

4. Vorrichtung nach Anspruch 1, die ferner einen aufblasbaren Ballon umfasst, der in dem Lagerfach (24) untergebracht ist, wobei das Konservierungsfluid in einem flexiblen Behälter (42) enthalten ist, der in dem Lagerfach (24) untergebracht ist, wobei die Einleitung von komprimiertem Druckgas zu einer Ausdehnung des aufblasbaren Ballons führt, so dass sich die Wände des Ballons auf den Wänden des flexiblen Behälters (42) abstützen und eine Ausleitung des Konservierungsfluids (41) in Richtung der Konservierungskammern bewirken.

5. Vorrichtung nach einem der Ansprüche 1 bis 4, die ferner Konservierungsfluid-Zirkulationskanäle (23) und Zirkulationskanäle (23) für komprimiertes Gas umfasst, wobei die Kanäle (23) in die Masse graviert sind.

6. Vorrichtung nach einem der Ansprüche 1 bis 5, die ferner einen den Konservierungskammern (1) nachgelagerten Rückgewinnungsbehälter (25) umfasst, wobei das Umschaltsystem (26) dem Rückgewinnungsbehälter (25) vorgelagert angeordnet ist und erlaubt, den Durchfluss des Konservierungsfluids (41) im Inneren der Konservierungskammern (1) zu kontrollieren.

7. Vorrichtung nach den Ansprüchen 1 und 6, herangezogen in Kombination, wobei das Umschaltsystem (26) mindestens ein Ventil umfasst, das dank des in mindestens eine Kontrollstelle (22a, 22b, 22c, 22d) eingeleiteten komprimierten Kontrollgases durch pneumatischen Druck gesteuert wird, wobei jedes Ventil bei Abwesenheit von komprimiertem Kontrollgas an der mindestens einen Kontrollstelle (22a, 22b, 22c, 22d) geschlossen ist.

8. Vorrichtung nach einem der Ansprüche 1 bis 7, die ferner einen Aufblasballon umfasst, wobei die manuelle Betätigung des Aufblasballons erlaubt, den Druck im Lagerfach und damit in den Konservierungskammern zu erhöhen.

9. Vorrichtung nach einem der Ansprüche 1 bis 8, wobei die Einlass- (21) und Kontrollstellen (22) derart auf der Vorrichtung ausgebildet sind, dass sie automatisch mit Verbindungsmitteln verbunden werden, die mit der Einleitvorrichtung (43) beim Einsetzen der Vorrichtung in eine Empfangsstation (6) verbunden sind.

10. Vorrichtung nach Anspruch 9, die ferner Führungsmittel an ihrem Umfang umfasst, die erlauben, die Vorrichtung in ein Fach einer Trägerstruktur der Empfangsstation (6) einzuführen.

## Claims

1. A medical device in the form of a cartridge (2) incorporating an assembly allowing the preservation of previously removed corneal tissue (3), the device comprising:
- an at least partially transparent base (11),
- at least one side wall (12),
- means for receiving and locking corneal tissue, and
- a transparent lid (C) for covering an opening in the side wall opposite the base (11),
- a storage compartment (24) containing a preserving fluid (41),
- at least one inlet terminal (21) upstream of the storage compartment (24), said inlet terminal (21) being intended to be connected to a device for injecting (43) compressed pressurizing gas, the pressurizing gas allowing:
∘ to eject the preserving fluid (41) contained in the storage compartment (24) to the preservation chambers,
∘ to maintain the preserving fluid (41) at a predefined pressure,
the device being configured such that, in use, the base (11), the side wall (12), and the lid (C) define with the corneal tissue endothelial and epithelial preservation chambers,
**characterized in that** the device further comprises, upstream of the preservation chambers:
- at least one control terminal (22) upstream of the storage compartment (24), said control terminal (22) being intended to be connected to a control compressed gas injection device (43),
- a pneumatically piloted switching system (26) downstream of the terminals (21, 22), said switching system (26) being piloted by the control compressed gas to allow or prohibit the flow of the pressurizing compressed gas to the storage compartment (24).

2. The device as claimed in claim 1, which further comprises a filter (433) upstream of the storage compartment (24) for filtering the pressurized compressed gas injected at the inlet terminal (21).

3. The device as claimed in claim 2, wherein the preserving fluid is contained directly in the storage compartment (24), wherein the filtered pressurizing compressed gas injected at the inlet terminal is introduced directly into the storage compartment (24) and mixed with the preserving fluid (41).

4. The device as claimed in claim 1, which further comprises an inflatable ball housed in the storage compartment (24), the preserving fluid being contained in a flexible container (42) housed in the storage compartment (24), the injection of pressurizing compressed gas inducing an expansion of the inflatable ball so that the walls of said ball presses against the walls of the flexible container (42) and causes the ejection of the preserving fluid (41) towards the preservation chambers.

5. The device as claimed in any of claims 1 to 4, which further comprises channels (23) for the circulation of preserving fluid and channels (23) for the circulation of compressed gas, said channels (23) being etched in the mass.

6. The device as claimed any one of claims 1 to 5, which further comprises a recovery reservoir (25) downstream of the preservation chambers (1), the switching system (26) being arranged upstream of the recovery reservoir (25) and being capable of controlling the flow rate of the holding fluid (41) within the preservation chambers (1).

7. The device as claimed in claims 1 and 6 taken in combination, wherein the switching system (26) comprises at least one valve controlled by pneumatic pressure by means for controlling compressed gas injected into the at least one control terminal (22a, 22b, 22c, 22d), each valve being closed in the absence of control compressed gas applied to the at least one control terminal (22a, 22b, 22c, 22d).

8. The device as claimed in any one of claims 1 to 7, which further comprises an inflation balloon, wherein manual actuation of the inflation balloon increases the pressure in the storage compartment and thus in the preservation chambers.

9. The device as claimed in any one of claims 1 to 8, wherein the input (21) and control (22) terminals are arranged on the device so as to be automatically connected to linking means connected to the injection device (43) upon insertion of said device into a docking station (6).

10. The device as claimed in claim 9, which further comprises guide means at its periphery for plugging said device into a rack of a docking station support structure (6).
